# EUROPEAN PATENT APPLICATION

(11) **EP 1 302 299 A1**
(43) Date of publication of application: **16.04.2003**
(21) Application number: 01830651.4
(22) Date of filing: 16.10.2001
(51) Int. Cl.: B29C 49/00, B65D 1/00

(54) **A method for making bag-style containers and items of luggage**

(71) Applicant: PLASTIMODA S.p.A., 40057 Cadriano di Granarolo Emilia, Bologna (IT)
(72) Inventor: Trento, Paolo, 40136 Bologna (IT)
(74) Representative: Lanzoni, Luciano

(57) **Abstract**

A flat container (1), made by joining two sheets (2, 3) of thermoplastic material placed over each other, is heated to a state of partial plasticization and a jet of air under pressure is blown into the container (1) through a one-way air valve (9) to form a handbag (15).

## Description

The present invention relates to a method for making bag-style containers and items of luggage.

The invention relates in particular to a method for forming bag-style containers and items of luggage such as handbags, travelling bags and suitcases from thermoplastic material.

Without restricting the scope of the inventive concept, the specification below refers to handbags to denote any bag-style containers or item of luggage.

It is known that bag style containers and items of luggage are frequently made from thermoplastic materials. The thermoplastic materials, used to make both the main body and the accessory parts of the handbags, are thermoformed in appropriate moulds which reproduce the shapes of the handbags and their parts.

The main disadvantage of this forming method, known generically as moulding, is the high cost of making the moulds.

Moulds such as these, especially in this sector, which is strongly influenced by impalpable trends dictated by the whims of fashion, require high initial outlays to make products whose subsequent performance on the market cannot, however. be forecast with any degree of precision.

Another disadvantage of using this forming method is that each handbag style and size to be made requires a different mould, thus increasing production and storage costs.

The aim of the present invention is to overcome the above mentioned disadvantages with a forming method that does not require the use of moulds and that is at once functional, versatile and economical to implement.

Accordingly, the present invention provides a method for making bag-style containers and items of luggage comprising the steps of: positioning one or more sheets of thermoplastic material in such a manner as to form a flat container; heating the container to a temperature of at least partial plasticization of the thermoplastic material; the method being characterised in that it further comprises a step of feeding a fluid under pressure into the container in such a way as to give the container a defined shape.

The present invention also relates to the bag-style containers and items of luggage made using this method.

The technical characteristics of the invention, with reference to the above aim, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figures 1, 2 and 3 are perspective views from above illustrating three successive steps of the method according to the invention;
- Figure 4 is a perspective view showing a product made according to the method illustrated in the other drawings.

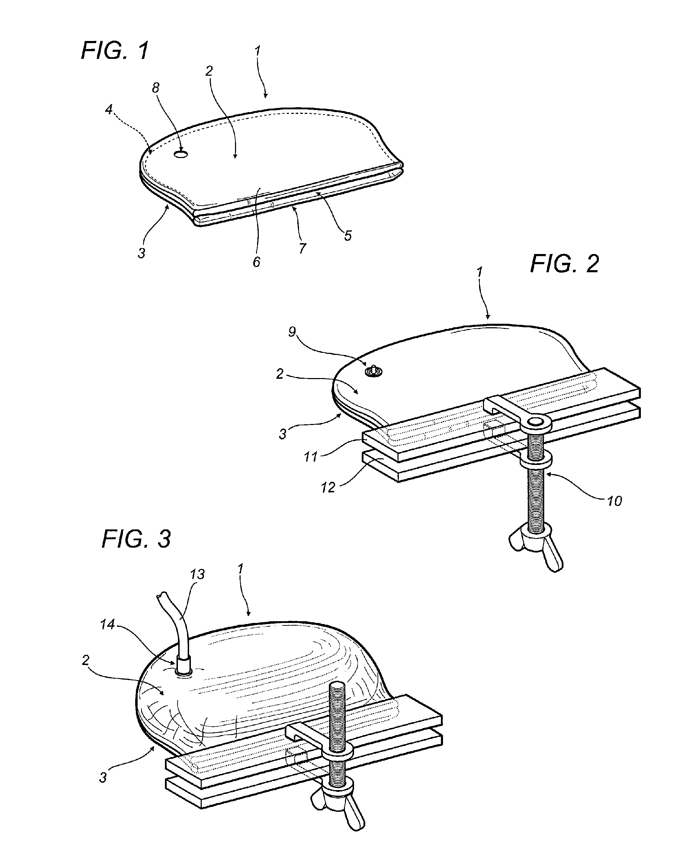

With reference to Figure 1, the numeral 1 denotes in its entirety a pouch-like container consisting of two substantially flat sheets 2, 3 of a thermoplastic material.

The two sheets 2, 3 are placed over each other and stitched along a shared profile 4 having a substantially curved shape and indicated by a dashed line in the illustration.

Along a straight, peripheral section 5, the two sheets 2, 3 are not stitched and form with their respective edges 6, 7 an opening that provides access to the inside of the pouch-like container 1. The opening is not illustrated in the drawings.

A through hole 8 is made in one of the sheets 2, 3. As shown in Figure 2, a one-way air valve 9 is connected to the hole 8 in order to allow air to be blown under pressure into the container 1.

According to the method of the present invention, the container 1 illustrated in Figure 2 is heated, preferably to a temperature of around 150°C, by customary heating means (not illustrated), to reach a state of at least partial plasticization of the thermoplastic material.

As shown in Figure 3, the opening, which is not illustrated, in the container 1, is closed up by customary pressing means, for example a clamp 10, with wide gripping surfaces 11, 12 extending along the full length of the straight section 5.

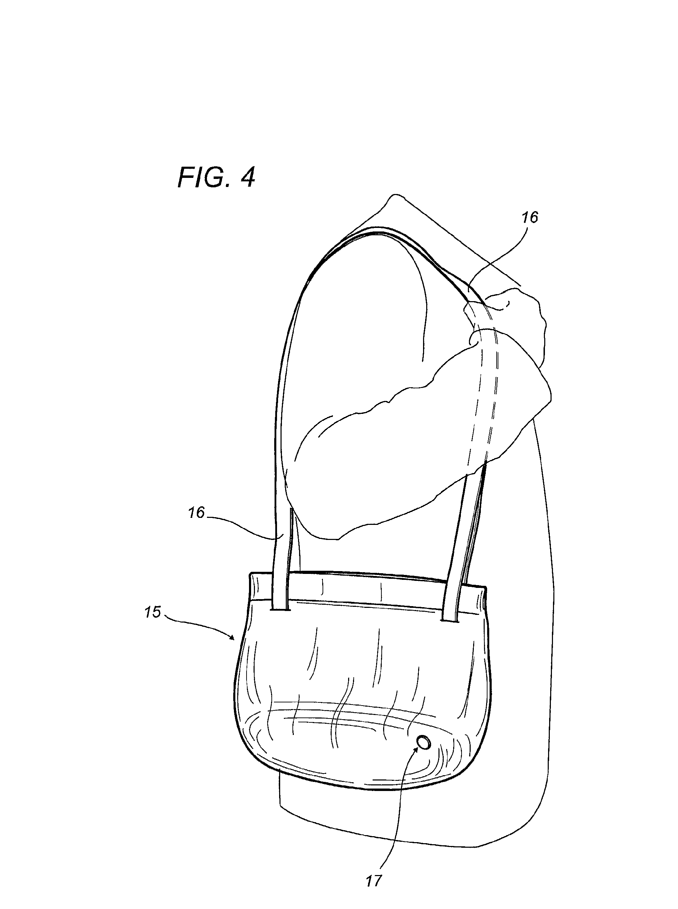

With reference to Figure 4, when the body of the container 1 is still warm, air under pressure is blown into it using a customary air source (not illustrated) through an air hose 13 whose delivery end 14 is connected to the aforementioned one-way air valve 9.

The air blown into the container 1 exerts pressure on the inside of the sheets 2, 3 in such a way as to inflate the container 1. The inflating action is made possible by the partial plasticization of the thermoplastic material following the heating of the container 1.

As a result of this inflating action, a defined pressure is created inside the container 1 which causes it to be plastically deformed into a rounded shape which confers on it the three-dimensional form of a handbag 15.

The air under pressure is blown in continuously for a defined length of time in order to compensate for any air escaping not only through the sides of the sheets 2, 3, which are not necessarily impermeable, but also through the stitching, which is not necessarily airtight.

The air blown into the container 1 also has a cooling action on the thermoplastic material from which the sheets 2, 3 are made and which thus loses its partial plasticity and stiffens in the aforementioned rounded shape of a handbag 15 to which accessory parts can subsequently be applied, if necessary.

As shown in Figure 4, the handbag 15 comprises two straps 16 applied subsequently, by which a user can carry the handbag 15, and an element 17 for closing the hole 8 from which the one-way air valve 9 has been removed.

Advantageously, the closing element 7 bears distinctive marks and signs identifying the style and/or manufacturer of the handbag 15.

Advantageously, the thermoplastic material consists of neoprene.

The method according to the present invention can thus be used to form bag-style containers and items of luggage without using moulds.

The invention described can be subject to modifications and variations without thereby departing from the scope of the inventive concept. Moreover, all the details of the invention may be substituted by technically equivalent elements.

## Claims

1. A method for making bag-style containers and items of luggage comprising the following steps:
- positioning one or more sheets (2, 3) of thermoplastic material in such a manner as to form a flat container (1);
- heating the container (1) to a temperature of at least partial plasticization of the thermoplastic material;
the method being **characterised in that** it further comprises a step of feeding a fluid under pressure into the container (1) in such a way as to give the container (1) a defined shape.

2. The method according to claim 1, **characterised in that** it further comprises the step of:
- closing the container (1), at least partially and at least for the time in which the fluid is supplied, in order to limit the escape of the fluid under pressure from the container (1) and so as to enable a defined pressure to be maintained inside the container (1).

3. The method according to claims 1 and 2, **characterised in that** it further comprises the step of:
- making in at least one of the sheets (2, 3) of thermoplastic material, at least one hole (8) through which the fluid under pressure is fed into the container (1).

4. The method according to claim 1, **characterised in that** it further comprises the step of cooling the container (1) when it has assumed the defined shape.
